# EUROPÄISCHE PATENTSCHRIFT

(11) **EP 2 373 873 B1**
(45) Veröffentlichungstag und Bekanntmachung des Hinweises auf die Patenterteilung: **28.01.2015**
(21) Anmeldenummer: 09799351.3
(22) Anmeldetag: 22.12.2009
(51) Int. Cl.: F01D 17/16, F01D 25/28, F02C 6/12, F02C 9/20, F04D 29/60, F04D 29/66

(54) **TURBOMASCHINENFUSSEINHEIT**
TURBINE PEDESTAL UNIT
UNITÉ PIÉDESTAL D'UNE TURBINE

(30) Priorität: 22.12.2008 DE 102008064371
(43) Veröffentlichungstag der Anmeldung: 12.10.2011
(73) Patentinhaber: Siemens Aktiengesellschaft, 80333 München (DE)
(72) Erfinder: HUTH, Sebastian, 41068 Mönchengladbach (DE); MEYER, Marcus, 47119 Duisburg (DE); ZACHARIAS, Wolfgang, 47198 Duisburg (DE)
(86) Internationale Anmeldenummer: PCT/EP2009/067776
(87) Internationale Veröffentlichungsnummer: WO 2010/072780

(56) Entgegenhaltungen:
- EP-A1- 1 176 286
- WO-A1-98/53183
- US-A- 4 076 452
- US-A- 5 108 258

## Beschreibung

Die Erfindung betrifft eine Turbomaschinenfußeinheit mit mehreren Füßen zum Befestigen an einer Turbomaschine und zum Stehen der Turbomaschine auf einem horizontalen Grund und mit Befestigungsmitteln zum Befestigen der Füße auf dem Grund, wobei zumindest einer der Füße bei auf dem Grund befestigter Turbomaschine relativ zu einem der Befestigungsmittel, das den Fuß am Grund befestigt, horizontal beweglich gelagert ist.

Turbomaschinen für industrielle Zwecke oder in Kraftwerken sind häufig mit einer elektrischen Maschine verbunden, beispielsweise ein Turboverdichter mit einem Elektromotor zum Antrieb des Turboverdichters oder eine Turbine mit einem Generator zur Kraftübertragung von der Turbine auf den Generator. Um bei einer Kraftübertragung zwischen den Maschinen die verbindende Welle nicht hoch zu belasten, ist eine solche Turbomaschine üblicherweise auf einem Grund befestigt, beispielsweise einem Fundament oder einem Grundrahmen. Auf diesem ruht die Turbomaschine im Betrieb fest fixiert, wobei die feste Fixierung auch Vibrationen der Turbomaschine entgegenwirkt.

Zur Befestigung einer Turbomaschine auf einem Grund ist es bekannt, die Turbomaschine auf Füße zu stellen, die fest mit dem Grund verschraubt sind. Die Füße sind ihrerseits mit der Turbomaschine verbunden, beispielsweise verschweißt oder einstückig mit einem Gehäuseelement gegossen, sodass die Turbomaschine fest im Grund verankert ist.

Aus der EP 1 176286 A1 ist bereits ein Turbolader bekannt mit symmetrischer Langlochbefestigung. Die US 4 076 452 A US 5 108 258 A, WO 98/53183 A1 zeigen Turbinen mit verschiedenen Auflagerkonstruktionen.

Es ist eine Aufgabe der vorliegenden Erfindung, eine Turbomaschinenfußeinheit anzugeben, mit der eine Turbomaschine für den industriellen oder Kraftwerksgebrauch sicher an einem Grund verankert werden kann.

Diese Aufgabe wird durch eine Turbomaschinenfußeinheit der eingangs genannten Art, gemäß Anspruch 1 gelöst.

Die Erfindung geht hierbei von der Überlegung aus, dass eine Turbomaschine im Laufe ihres Betriebs heiß wird, wobei die Hitze ungleichmäßig im Volumen der Turbomaschine verteilt ist. Beispielsweise wird bei einem Luftverdichter die von Stufe zu Stufe immer höher verdichtete Luft wärmer, sodass die Turbomaschine am Lufteintritt relativ kühl und am Austritt der verdichteten Luft heiß ist. Durch die Hitze dehnt sich die Turbomaschine in ihrer Gesamtheit aus, wodurch Spannungen und Verformungen auf fest am Grund fixierte Füße übertragen werden. Bei häufigem Temperaturwechsel der Turbomaschine findet so eine Ermüdung der Füße bzw. der Fußeinheit der Turbomaschine statt, wodurch eine sichere Befestigung am Grund durch eine Materialermüdung gefährdet ist. Durch die Beweglichkeit von zumindest einem der Füße relativ zum horizontalen Grund bzw. einem am Grund fixierten Befestigungsmittel können der entsprechende Fuß einen Längenausgleich mitverfolgen, sodass die mechanische. Belastung auf diesen Fuß im Vergleich zu fest fixierten Füßen verringert wird.

Der Grund kann ein Fundament sein. Auch ein Grundrahmen, eine Zwischenplatte oder Ähnliches können ein Grund sein, wobei diese dann zweckmäßigerweise fest am Fundament oder Boden befestigt sind, also unbeweglich zum Boden sind. Die Füße dienen zur Befestigung an der Turbomaschine und sind zweckmäßigerweise an ihr befestigt, beispielsweise angeschweißt. Bei auf dem Grund befestigter Turbomaschine ist diese zweckmäßigerweise zur Durchführung ihres regulären Betriebs auf dem Grund befestigt. Die Turbomaschine kann ein Turboverdichter oder eine Turbine sein und ist insbesondere für eine Leistung von mindestens 100 kW vorgesehen, insbesondere mindestens 500 kW. Die Anzahl der Füße ist beliebig. Vorteilhaft sind vier bewegliche Füße, wobei auch mehr bewegliche Füße oder beispielsweise zwei bewegliche und zwei unbewegliche Füße denkbar sind.

Die Beweglichkeit ist zweckmäßigerweise eine Beweglichkeit entlang des Grundes. Die Beweglichkeit kann eine ein-, zwei- oder dreidimensionale Beweglichkeit sein, wobei die zweite und/oder dritte Dimension keine horizontale Dimension sein muss.

In einer vorteilhaften Ausführungsform der Erfindung sind zumindest zwei der Füße unabhängig voneinander relativ zu den Befestigungsmitteln horizontal beweglich gelagert. Hierdurch können sie sich in ihrer Lage besonders flexibel auch an ein komplexes thermisches Ausdehnungsverhalten der Turbomaschine anpassen. Eine unabhängige Beweglichkeit ist gegeben, wenn ein Fuß bewegbar ist, ohne dass hierdurch eine Zwangsbewegung eines anderen Fußes erfolgt.

Zur beweglichen Lagerung ist eine gleitende Anordnung, beispielsweise des Fußes über den Grund, ausreichend. Die Beweglichkeit kann durch eine Bewegungshilfe erleichtert werden, beispielsweise eine Oberfläche bzw. Bahn, die zu einem besonders reibungsarmen Gleiten zweier Bauteile aufeinander vorbereitet ist, beispielsweise durch eine besonders glatte Oberfläche oder ein Schmiermittel.

In besonders einfacher Weise ist eine Beweglichkeit zwischen dem beweglichen Fuß und seinem Befestigungsmittel durch ein Spiel zwischen dem Befestigungsmittel und den Füßen erreichbar. Innerhalb dieses Spiels kann die Relativbewegung ein-, zwei- oder dreidimensional stattfinden.

Vorteilhafterweise umfasst der bewegliche Fuß eine Fußplatte mit einer Ausnehmung, durch die ein dem Fuß zugeordnetes Befestigungsmittel geführt ist, das den Fuß am Grund befestigt, wobei die Fußplatte bei einer horizontalen Bewegung des Fußes relativ zum Befestigungsmittel bewegt ist. Die horizontale Größe der Ausnehmung erlaubt so die horizontale Beweglichkeit der Füße. Zweckmäßigerweise ist die Ausnehmung vollständig von der Fußplatte umschlossen. Das Befestigungsmittel kann eine Schraube sein, die im Grund verschraubt ist. Ihr Schraubenkopf kann die Fußplatte direkt oder indirekt vertikal fixieren.

Besonders vorteilhaft umfasst das Befestigungsmittel eine Hülse mit einem Kragen, die die Schraube umfasst. Hierdurch kann der Kragen die Fußplatte vertikal fixieren, sodass - Unabhängigkeit von Fertigungsgenauigkeiten der Schraube - eine gleichmäßige Kraftaufteilung auf die Fußplatte zur Fixierung der Fußplatte erreicht werden kann.

Außerdem kann die Hülse einen Anpressdruck der Schraube auf die Fußplatte begrenzen, beispielsweise indem sie einen Teil des Anpressdrucks des Befestigungsmittels auf den Grund trägt. Hierdurch kann die Klemmkraft, die die Schraube auf die Fußplatte ausübt unabhängig von der Anzugskraft der Schraube einen Maximalwert eingestellt werden, der eine horizontale Bewegung der Fußplatte über den Grund erlaubt, ohne dass eine zu große Reibungskraft überwunden werden muss. Zweckmäßigerweise ist die Länge der Hülse bis zum Kragen gleich der Dicke der Fußplatte zwischen dem Grund und dem Kragen bzw. einer Kragenauflage der Fußplatte.

Zum Erleichtern der horizontalen Bewegung der Füße kann zwischen Kragen und Fußplatte eine Reibung verminderndes Mittel eingeführt sein, beispielsweise ein viskoses Schmiermittel oder Teflon. Das Gleiche gilt für eine Verbindung zwischen einer Fußplatte und einem Fundament oder Boden.

In einer weiteren vorteilhaften Ausgestaltung der Erfindung umfasst die Turbomaschinenfußeinheit ein auf dem Grund befestigtes Fixiermittel zum Fixieren eines Teils der Turbomaschine an einem horizontalen Fixpunkt gegen eine horizontale Bewegung. Hierdurch kann die durch die Füße erlaubte horizontale Beweglichkeit der Turbomaschine eingeschränkt werden, sodass beispielsweise eine Wellenverbindung zu einer elektrischen Maschine keinen zu großen mechanischen Belastungen unterworfen ist.

Als horizontaler Fixpunkt kann ein Punkt bzw. eine Stelle, beispielsweise der Turbomaschine, verstanden werden, an der eine horizontale Beweglichkeit unterbunden ist. Im horizontalen Fixierpunkt findet so eine Fixierung in allen Horizontalrichtungen statt. Das Fixiermittel kann eine am Grund befestigte Ausformung sein, zum Beispiel ein Bolzen, die in eine entsprechende Ausnehmung an der Turbomaschine oder der Fußeinheit eingreift, oder andersherum, sodass eine Ausformung an der Turbomaschine oder Fußeinheit in eine am Grund befestigte Ausnehmung eingreift.

Zweckmäßigerweise ist der bewegliche Fuß und insbesondere alle beweglichen Füße von dem horizontalen Fixpunkt weg und zu dem horizontalen Fixpunkt hin beweglich gelagert, beispielsweise sternförmig, sodass eine Ausdehnung der Turbomaschine vom Fixpunkt weg in eine entsprechende Bewegung der Füße übertragen werden kann.

Durch die Füße wird die Turbomaschine senkrecht zum Grund fixiert. Um eine thermische Ausdehnung in beispielsweise der Vertikalrichtung zu erlauben, erlaubt das Fixiermittel vorteilhafterweise eine vertikale Bewegung der Turbomaschine. Eine überbestimmte Fixierung kann hierdurch umgangen werden.

Vorteilhafterweise liegt das Fixiermittel in einer vertikalen Mittelebene, die durch eine Rotorwelle der befestigten Turbomaschine verläuft. Hierdurch kann eine horizontale Position der Welle der Turbomaschine fixiert werden, sodass bei einer thermischen Ausdehnung der Turbomaschine die Welle nur gering mechanisch belastet wird. Mit gleichem Vorteil ist das Fixiermittel an einer Seite der Turbomaschine angeordnet, die einem Antrieb zugewandt ist, beispielsweise einem Elektromotor zum Antrieb der als Verdichter ausgeführten Turbomaschine, oder einem Generator bei einer Turbine.

Es wird ferner vorgeschlagen, dass die Turbomaschinenfußeinheit ein auf dem Grund befestigtes Führungsmittel zum Beschränken der Horizontalbewegung eines Teils der Turbomaschine auf eine eindimensionale Bewegung umfasst. Das Führungsmittel kann ein Mittenführungsbock sein, der als radialer Fixpunkt zum Verhindern einer Drehung der Turbomaschine in der Horizontalen dient. Eine Belastung auf die Welle kann gering gehalten werden.

Hierfür ist die eindimensionale Bewegung zweckmäßigerweise in eine Wellenrichtung parallel zu einer Rotorwelle der befestigten Turbomaschine gerichtet. Außerdem ist es vorteilhaft, wenn das Führungsmittel in einer vertikalen Mittelebene liegt, die durch eine Rotorwelle der befestigten Turbomaschine verläuft. Um eine Belastung der Welle in Welleinrichtung gering zu halten, insbesondere an einem Anschluss zu einer elektrischen Maschine, ist es vorteilhaft, wenn das Führungsmittel an einer Seite der Turbomaschine angeordnet ist, die einem Antrieb abgewandt ist.

Außerdem ist die Erfindung gerichtet auf eine Turbomaschine mit einer wie oben beschriebenen Turbomaschinenfußeinheit.

Die Erfindung wird anhand von Ausführungsbeispielen näher erläutert, die in den Zeichnungen dargestellt sind.

Es zeigen:
- FIG 1: eine perspektivische schematische Darstellung einer Turbomaschine und einer an ihr befestigten Turbomaschinenfußeinheit mit vier Füßen,
- FIG 2: ein Fixierungsschema in Form einer Ansicht von oben auf den Grund,
- FIG 3: eine weitere Turbomaschinenfußeinheit in einer perspektivischen Ansicht,
- FIG 4: eine Schnittdarstellung durch einen Fuß der Turbomaschinenfußeinheit aus FIG 3,
- FIG 5 und FIG 6: eine Schnittdarstellung und Aufsicht auf einen Mittenführungsbock der Turbomaschinenfußeinheit aus FIG 3,
- FIG 7 und FIG 8: eine Schnittdarstellung und Aufsicht auf einen Mittenführungsbolzen der Turbomaschinenfußeinheit aus FIG 3 und
- FIG 9: eine Turbomaschinenfußeinheit auf einem angehobenen Grund

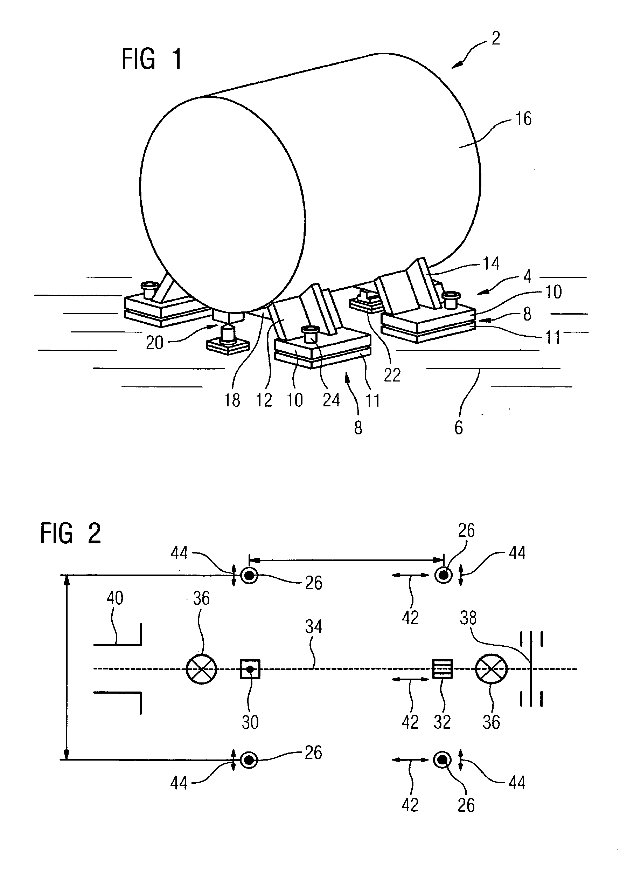

FIG 1 zeigt eine Turbomaschine 2 in einer schematischen, perspektivischen Darstellung mit einer Turbomaschinenfußeinheit 4, die an einem Gehäuse 16 der Turbomaschine 2 angeschweißt ist. Die Turbomaschinenfußeinheit 4 steht auf einem in FIG 1 angedeuteten Grund 6, der sich horizontal ausdehnt und ein ebenes Fundament und an jedem Fuß 8 eine Fußplatte 11 umfasst. Die Turbomaschinenfußeinheit 4 umfasst vier Füße 8, mit jeweils einer Fußplatte 10 und zwei senkrecht aufeinander stehenden Fußblechen 12, 14, die an dem Gehäuse 16 der Turbomaschine 2 angeschweißt sind. An ihrem der Turbomaschine 2 gegenüber liegendem Ende sind die beiden Fußbleche 12, 14 mit der Fußplatte 10 verschweißt. Über jeweils ein Querblech 18 sind jeweils zwei Füße 8, miteinander verbunden. Ebenfalls denkbar ist, dass jeweils zwei Fußbleche 14 und ein Querblech 18 einstückig ausgeführt sind und die Fußbleche 12 zweiteilig sind und beidseitig an ein Fußblech 14 angeschweißt sind.

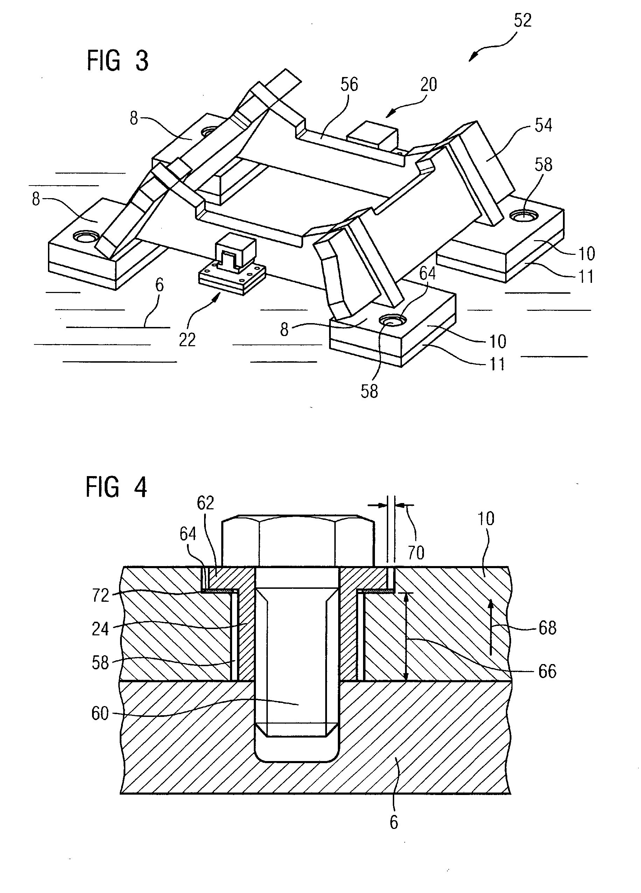

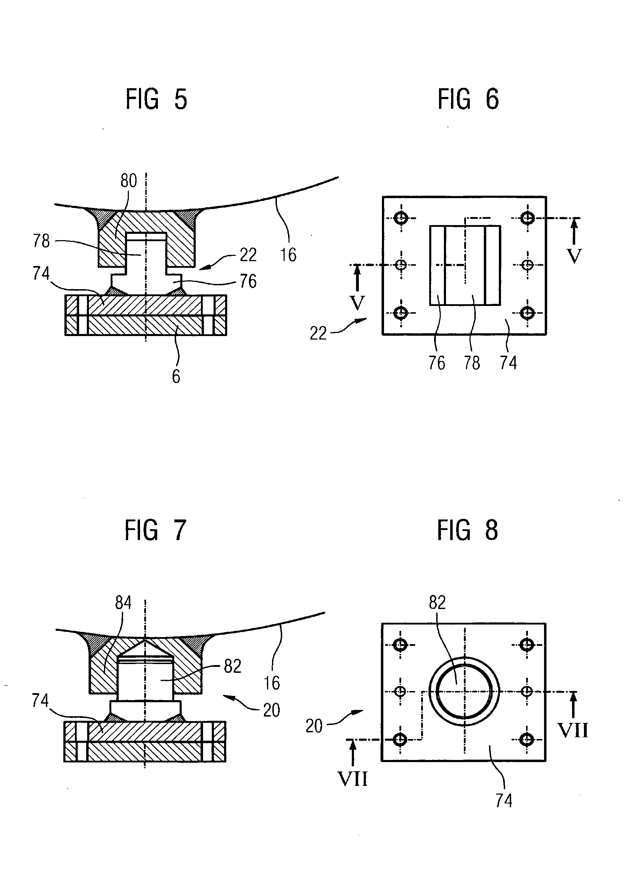

In der Art einer Explosionszeichnung sind in FIG 1 außerdem ein Fixiermittel 20 dargestellt, das in FIG 7 und 8 ausführlicher gezeigt ist, sowie ein Führungsmittel 22, das in den FIG 5 und 6 detaillierter dargestellt ist, und zu jedem Fuß 8 jeweils eine Hülse 24, die in FIG 4 größer gezeigt ist.

FIG 2 zeigt ein Fixierungsschema der Turbomaschine 2 auf dem Grund 6 bzw. dessen Zwischenplatten 11. Dargestellt sind vier Befestigungsstellen 26 der Füße 8 auf dem Grund 6, ein durch das Fixiermittel 20 festgelegter Fixierpunkt 30 sowie ein Führungsbereich 32, der durch das Führungsmittel 22 festgelegt ist. Mit einer gestrichelten Linie ist außerdem eine Welle 34 eines Rotors der Turbomaschine 2 angedeutet, die durch zwei Wellenradiallager 36 und ein Wellenaxiallager 38 gelagert ist. Angedeutet ist außerdem eine Kupplung 40 zu einem nicht dargestellten Antrieb, beispielsweise einem Elektromotor bei einer als Verdichter ausgeführten Turbomaschine 2.

Das Fixiermittel 20 ist vertikal unterhalb der Rotorwelle 34 platziert, so dass sie in einer senkrecht zur Papierebene verlaufenden, vertikalen Mittelebene angeordnet ist, die durch die Rotorwelle 34 der befestigten Turbomaschine 2 verläuft.

Wie anhand der nachfolgenden Figuren näher erläutert wird, sind die Füße 8 im auf dem Grund 6 befestigten Zustand in Horizontallängsrichtung 42 und Horizontalquerrichtung 44 bzw. nur in Horizontalquerrichtung 44 beweglich, sodass sie eine thermische Ausdehnung- oder Kontraktionsbewegung der Turbomaschine 2 im Wesentlichen mit vollziehen und so eine Scherkraft auf die Füße 8 bzw. auf die Fußbleche 12, 14 und ihre Schweißverbindungen sowie auf Befestigungsmittel 60 (FIG 4) gering bleibt. Die Horizontallängsrichtung 42 ist parallel zur Längsrichtung der Rotorwelle 34 der Turbomaschine und die Horizontalquerrichtung 44 ist quer zur Längsrichtung der Rotorwelle 34.

Durch das Fixiermittel 20 ist die Turbomaschine 2 an ihrer der Kupplung 40 zugewandten Seite unten in Fixierpunkt 30 in allen Horizontalrichtungen 42, 44 fixiert, sodass dort eine Bewegung der Turbomaschine 2 in allen Horizontalrichtungen 42, 44 unterbunden ist. Eine Bewegung senkrecht zu den Horizontalrichtungen 42, 44, also senkrecht zum Grund 6 ist allerdings möglich, sodass die Turbomaschine 2 eine thermische Ausdehnung der Fußbleche 12, 14 ohne Spannungen mit vollziehen kann.

Bei einem Betrieb der Turbomaschine 2 heizt sich diese auf, sodass sich ihr Gehäuse 16 thermisch ausdehnt. Die Ausdehnung erfolgt in alle drei Raumrichtungen. Da die Turbomaschine 2 nur von unten durch die Turbomaschinenfußeinheit 4 gehalten ist, erzeugt die Fixierung der Turbomaschine 2 auf dem Grund 6 in Vertikalrichtung bzw. senkrecht zum Grund keine mechanischen Spannungen in der Turbomaschine 2. Durch die Ausdehnung der Turbomaschine 2 in die Horizontalrichtungen 42, 44 würden allerdings Spannungen auf die Füße 8 wirken, wenn diese fest am Grund 6 fixiert wären.

Unter ausschließlicher Betrachtung der Horizontalrichtungen 42, 44 ist die Turbomaschine 2 durch das Fixiermittel 20 im Fixierpunkt 30 fixiert. Dieser Punkt der Turbomaschine 2 ruht also bei allen horizontalen Ausdehnungsbewegungen. Anders bei den Füßen 8, die durch eine thermische Ausdehnung der Turbomaschine 2 vom Fixierpunkt 30 weg geschoben werden. So bewegen sich die beiden dem Fixiermittel 20 benachbarten Füße 8 in Horizontalquerrichtung 44 vom Fixierpunkt 30 weg und bei einer thermischen Kontraktion zum Fixierpunkt 30 hin. Die beiden weiter entfernten Füße 8 bewegen sich um die Befestigungsstelle 26 sowohl in Horizontallängsrichtung 42 als auch in Horizontalquerrichtung 44. Durch das Führungsmittel 22 wird eine Bewegung der Turbomaschine 2 im Führungsbereich 32 in Horizontalquerrichtung 44 verhindert und nur eine Bewegung in Horizontallängsrichtung 42 zugelassen. Hierdurch wird eine Rotationsbewegung der Turbomaschine 2 um den Fixierpunkt 30 verhindert und somit die mechanische Belastung auf die Welle 34 bzw. die Kupplung 40 gering gehalten.

FIG 3 zeigt eine alternative Turbomaschinenfußeinheit 52 ohne eine darauf gesetzte Turbomaschine 2 in einer perspektivischen Darstellung. Die Beschreibung der nachfolgenden Figuren beschränkt sich im Wesentlichen auf die Unterschiede zum Ausführungsbeispiel aus FIG 1, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

Im Unterschied zu der Turbomaschinenfußeinheit 4 umfasst die Turbomaschinenfußeinheit 52 zwei Füße 8 miteinander verbindende Fußbleche 54 und durchgehende Querbleche 56, die an ihren beiden äußeren Enden ebenfalls Fußbleche bilden, die mit den Fußbleche 54 verschweißt sind. Fußbleche 54 und Querbleche 56 sind ihrerseits mit den Füßen 8 verschweißt.

In FIG 3 sind Ausnehmungen 58 in den Fußplatten 10 sichtbar, die in FIG 4 in einer geschnittenen Ansicht erstellt sind. In diese Ausnehmungen 58 werden zum Befestigen der Turbomaschinenfußeinheit 52 auf dem Grund 6 die Hülsen 24 eingesetzt, durch die jeweils ein als Schraube ausgeführtes Befestigungsmittel 60 hindurchgeführt ist. Das Befestigungsmittel 60 ist mit dem Grund 6 verschraubt und presst so die Hülse 24 auf den Grund 6. Der Anpressdruck kann hierbei gering sein. Wich Der Anpressdruck kann hierbei gering sein. Wichtig ist lediglich die Fixierung in vertikaler Richtung.

Die Hülse 24 umfasst an ihrem äußeren Ende einen Kragen 62, der einerseits eine Auflage für den Schraubenkopf bildet und andererseits einen Absatz 64 der Ausnehmung 58 teilweise überdeckt und so innerhalb der Ausnehmung 58 auf der Fußplatte 10 aufliegt. Die Länge 66 der Hülse 24 von ihrem unteren Ende bis zum Kragen 62 ist hierbei so gewählt, dass sie der Dicke der Fußplatte 10 vom Grund 6 bis zum Absatz 64 gleicht. Durch das Verspannen der Hülse 24 auf dem Grund 6 ist somit auch die Fußplatte 10 gegen eine Bewegung in Vertikalrichtung 68 vom Grund 6 weg gesichert. In den Horizontalrichtungen 42, 44 ist die Fußplatte 10 jedoch in ihrer Bewegung insoweit frei, als die Ausnehmung 58 in ihrem Durchmesser um das zweifache der Länge 70 größer ist als der Durchmesser der Hülse 24 in ihrem unteren Bereich bzw. im Bereich des Kragens 62. Durch dieses Spiel können alle Fußplatten 10 in beiden Horizontalrichtungen 42, 44 und in alle dazwischen liegenden Horizontalrichtungen bewegt werden, wobei die Füße 8 unabhängig voneinander horizontal beweglich sind.

Hierbei ist lediglich die Reibung der Fußplatte 10 auf dem Grund 6 und zwischen der Fußplatte 10 und dem Kragen 62 zu überwinden. Zum Reduzieren dieser Reibung ist zwischen dem Kragen 62 und dem Absatz 64 der Fußplatte 10 ein Gleitmittel 72 in Form eines Teflonrings oder Teflonfilms eingeführt. Befestigt das Befestigungsmittel 60 einen Fuß 8 nur an einer Zwischenplatte 11 des Grunds 6 und ist eine horizontale Bewegung zwischen Zwischenplatte 11 und Fundament bzw. Boden möglich, so kann das Gleitmittel zwischen Zwischenplatte 11 und Boden angeordnet sein. bzw. allgemein zwischen zwei horizontal zueinander beweglichen Elementen, wobei eines am Fuß 8 und das andere am Grund 6 befestigt ist.

FIG 5 zeigt das Führungsmittel 22 aus der Sicht in Horizontallängsrichtung 42 und FIG 6 zeigt eine Draufsicht auf das auf den Grund 6 befestigten Teil des Führungsmittels 22. Auf einer Grundplatte 74, die mit dem Grund 6 bzw. der Zwischenplatte 11 verschraubt ist, ist ein Führungsbock 76 aufgeschweißt, der eine in Horizontallängsrichtung 42 länglich ausgebildete Ausformung 78 aufweist. An dieser Ausformung 78, die eine Art Führungsschiene bildet, liegt eine am Gehäuse 16 angeschweißte Führung 80 in Horizontalquerrichtung 44 beidseitig an, sodass die Führung 80 und mit ihr die Turbomaschine 2 im Führungsbereich 32 an einer Bewegung in Horizontalquerrichtung 44 gehindert ist. Eine Bewegung in Horizontallängsrichtung 42 wird durch die schienenartige Ausformung 78 geführt.

In Analogie zu den FIG 5 und 6 zeigen die FIG 7 und 8 das Fixiermittel 20 in einer Seitendarstellung und Draufsicht. Ein Bolzen 82 ist in eine Ausnehmung in einer Führung 84 am Gehäuse 16 eingesteckt und blockiert so eine Bewegung der Turbomaschine 2 im Fixierpunkt 30 in alle Horizontalrichtungen 42, 44. Eine Bewegung in Vertikalrichtung 68 bleibt jedoch - wie auch beim Führungsmittel 22 - erhalten. Zwar ist eine Rotationsbewegung der Turbomaschine 2 um den Fixierpunkt 30 durch das Fixiermittel 20 wegen der rotationssymmetrischen Ausbildung von Bolzen 72 und Ausnehmung in der Führung 84 nicht blockiert, diese Rotationsbewegung ist jedoch durch das Führungsmittel 22 blockiert, wie beschrieben.

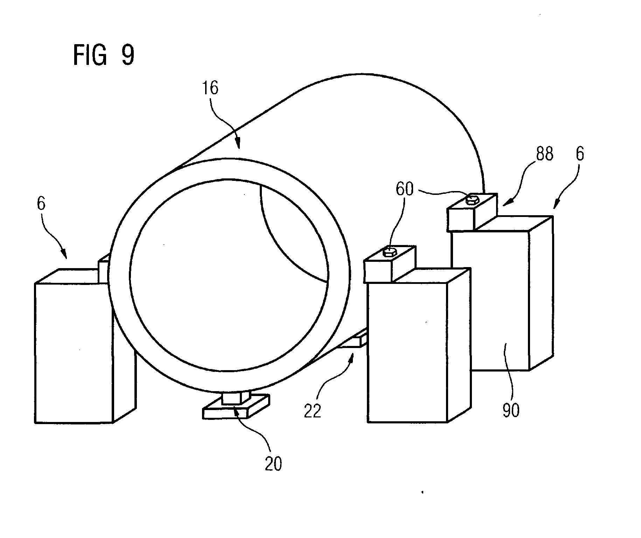

FIG 9 zeigt ein weiteres Ausführungsbeispiel mit einer Turbomaschinenfußeinheit 86 mit Füßen 88, bei denen eine horizontale Gleitebene zwischen Fuß 88 und Grund 6 in vertikaler Höhe einer Welle der Turbomaschine liegt. Hierzu umfasst der Grund Böcke 90, die den Grund 6 bis auf diese Gleitebene anheben und die untereinander in Horizontalrichtung stabil versteift sein können. Die Mittenführung mit Fixiermittel 20 und Führungsmittel 22 bleibt erhalten. Allerdings bewirkt eine thermische Ausdehnung nicht nur eine Bewegung der Komponenten der Turbomaschine nach oben, sondern gleichmäßig von der Maschinenachse, die in der Mitte der Maschinenwelle liegt, nach oben und nach unten weg von den Füßen 88 bzw. der Gleitebene zwischen Füßen 88 und Grund 6. Somit bleibt die Maschinenwelle in ihrer Position, sowohl vertikal als auch horizontal, und es kommt zu keinem erheblichen Ausrichtefehler durch eine thermische Dehnung.

## Patentansprüche

1. Turbomaschinenfußeinheit (4, 52) mit mehreren Füßen (8) zum Befestigen an einer Turbomaschine (2) und zum Stehen der Turbomaschine (2) auf einem horizontalen Grund (6) und mit Befestigungsmitteln (60) zum Befestigen der Füße (8) auf dem Grund (6),
wobei zumindest einer der Füße (8) bei auf dem Grund (6) befestigter Turbomaschine (2) relativ zu einem der Befestigungsmittel (60), das den Fuß (8) am Grund befestigt, horizontal beweglich gelagert ist,
**gekennzeichnet durch**
ein auf dem Grund (6) befestigtes Fixiermittel (20) zum Fixieren eines Teils der Turbomaschine (2) an einem horizontalen Fixpunkt (30) gegen eine horizontale Bewegung,
wobei ein auf dem Grund (6) befestigtes Führungsmittel (22) zum Beschränken der Horizontalbewegung eines Teils der Turbomaschine (2) auf eine eindimensionale Bewegung vorgesehen ist,
wobei die eindimensionale Bewegung in eine Wellenrichtung parallel zu einer Rotorwelle (34) der befestigten Turbomaschine (2) gerichtet ist.

2. Turbomaschinenfußeinheit (4, 52) nach Anspruch 1,
**dadurch gekennzeichnet, dass** zumindest zwei der Füße (8) unabhängig voneinander relativ zu den Befestigungsmitteln (60) horizontal beweglich gelagert sind.

3. Turbomaschinenfußeinheit (4, 52) nach Anspruch 1 oder 2,
**dadurch gekennzeichnet, dass** der bewegliche Fuß (8) eine Fußplatte (10) mit einer Ausnehmung (58) aufweist, durch die das den Fuß (8) am Grund (6) befestigende Befestigungsmittel (60) geführt ist, wobei die Fußplatte (10) bei einer horizontalen Bewegung des Fußes (8) relativ zum Befestigungsmittel (60) bewegt ist.

4. Turbomaschinenfußeinheit (4, 52) nach Anspruch 3,
**dadurch gekennzeichnet, dass** das Befestigungsmittel (60) eine durch eine Hülse (24) mit seinem Kragen (62) geführte Schraube umfasst, die im Grund (6) verschraubt ist, wobei der Kragen (62) die Fußplatte (8) auf den Grund (6) presst.

5. Turbomaschinenfußeinheit (4, 52) nach Anspruch 4,
**dadurch gekennzeichnet, dass** die Hülse (24) einen Teil des Anpressdrucks des Befestigungsmitteln (60) auf den Grund (6) trägt.

6. Turbomaschinenfußeinheit (4, 52) nach Anspruch 4 oder 5,
**dadurch gekennzeichnet, dass** zwischen Kragen (62) und Fußplatte (10) ein Reibung verminderndes Mittel (72) eingeführt ist.

7. Turbomaschinenfußeinheit (4, 52) nach einem der vorhergehenden Ansprüche,
**dadurch gekennzeichnet, dass** der bewegliche Fuß (8) von dem horizontalen Fixpunkt (30) weg und zu dem horizontalen Fixpunkt (30) hin beweglich gelagert ist.

8. Turbomaschinenfußeinheit (4, 52) nach einem der vorhergehenden Anspruche,
**dadurch gekennzeichnet, dass** das Fixiermittel (20) eine vertikale Bewegung der Turbomaschine (2) erlaubt.

9. Turbomaschinenfußeinheit (4, 52) nach einem der vorhergehenden Ansprüche,
**dadurch gekennzeichnet, dass** das Fixiermittel (20) in einer vertikalen Mittelebene liegt, die durch eine Rotorwelle (34) der befestigten Turbomaschine (2) verläuft.

10. Turbomaschinenfußeinheit (4, 52) nach einem der vorhergehenden Ansprüche,
**dadurch gekennzeichnet, dass** das Fixiermittel (20) an einer Seite der Turbomaschine (2) angeordnet ist, die einem Antrieb zugewandt ist.

11. Turbomaschinenfußeinheit (4, 52) nach einem der vorhergehenden Ansprüche,
**dadurch gekennzeichnet, dass** das Führungsmittel (22) in einer vertikalen Mittelebene liegt, die durch eine Rotorwelle (34) der befestigten Turbomaschine (2) verläuft.

12. Turbomaschinenfußeinheit (4, 52) nach einem der vorhergehenden Ansprüche,
**dadurch gekennzeichnet, dass** das Führungsmittel (22) an einer Seite der Turbomaschine (2) angeordnet ist, die einem Antrieb abgewandt ist.

## Claims

1. Turbomachine foot unit (4, 52) with a plurality of feet (8) for fastening to a turbomachine (2) and for standing the turbomachine (2) on a horizontal base (6) and with fastening means (60) for fastening the feet (8) on the base (6), with the turbomachine (2) fastened to the base (6) at least one of the feet (8) being mounted so as to be horizontally movable in relation to one of the fastening means (60) which fastens the foot (8) to the base, **characterized by** a fixing means (20) fastened to the base (6), for fixing part of the turbomachine (2) at a horizontal fixed point (30) against horizontal movement, a guide means (22) fastened to the base (6), for restricting the horizontal movement of part of the turbomachine (2) to a one-dimensional movement, being provided, the one-dimensional movement being directed in a shaft direction parallel to a rotor shaft (34) of the fastened turbomachine (2).

2. Turbomachine foot unit (4, 52) according to Claim 1, **characterized in that** at least two of the feet (8) are mounted so as to be horizontally movable independently of one another in relation to the fastening means (60).

3. Turbomachine foot unit (4, 52) according to Claim 1 or 2, **characterized in that** the movable foot (8) has a foot plate (10) with a recess (58), through which the fastening means (60) fastening the foot (8) to the base (6) is led, the foot plate (10) being moved in relation to the fastening means (60) in the event of horizontal movement of the foot (8).

4. Turbomachine foot unit (4, 52) according to Claim 3, **characterized in that** the fastening means (60) comprises a screw which is led through a sleeve (24) having a collar (62) and which is screwed to the base (6), the collar (62) pressing the foot plate (10) onto the base (6).

5. Turbomachine foot unit (4, 52) according to Claim 4, **characterized in that** the sleeve (24) bears part of the pressure force of the fastening means (60) onto the base (6).

6. Turbomachine foot unit (4, 52) according to Claim 4 or 5, **characterized in that** a friction-reducing means (72) is introduced between the collar (62) and foot plate (10).

7. Turbomachine foot unit (4, 52) according to one of the preceding claims, **characterized in that** the movable foot (8) is mounted so as to be movable away from the horizontal fixed point (30) and toward the horizontal fixed point (30).

8. Turbomachine foot unit (4, 52) according to one of the preceding claims, **characterized in that** the fixing means (20) permits vertical movement of the turbomachine (2).

9. Turbomachine foot unit (4, 52) according to one of the preceding claims, **characterized in that** the fixing means (20) lies in a vertical mid-plane which runs through a rotor shaft (34) of the fastened turbomachine (2).

10. Turbomachine foot unit (4, 52) according to one of the preceding claims, **characterized in that** the fixing means (20) is arranged on a side of the turbomachine (2) which faces a drive.

11. Turbomachine foot unit (4, 52) according to one of the preceding claims, **characterized in that** the guide means (22) lies in a vertical mid-plane which runs through a rotor shaft (34) of the fastened turbomachine (2).

12. Turbomachine foot unit (4, 52) according to one of the preceding claims, **characterized in that** the guide means (22) is arranged on a side of the turbomachine (2) which faces away from a drive.

## Revendications

1. Unité ( 4, 52 ) de socle d'une turbomachine ayant plusieurs pieds ( 8 ) pour la fixation à une turbomachine ( 2 ) et pour mettre la turbomachine ( 2 ) sur un sol ( 6 ) horizontal et des moyens ( 60 ) de fixation pour la fixation des pieds ( 8 ) au sol ( 6 ) ,
dans laquelle au moins l'un des pieds ( 8 ) est monté, lorsque la turbomachine ( 2 ) est fixée sur le sol ( 6 ), mobile horizontalement par rapport à l'un des moyens ( 60 ) de fixation, qui fixe le pied ( 8 ) au sol,
**caractérisée par**
un moyen ( 20 ) fixé au sol ( 6 ) d'immobilisation d'une partie de la turbomachine ( 2 ) en un point ( 30 ) d'immobilisation horizontale, empêchant un déplacement horizontal,
dans laquelle il est prévu un moyen ( 22 ) de guidage fixé au sol ( 6 ), pour limiter le déplacement horizontal d'une partie de la turbomachine ( 2 ) à un déplacement unidimensionnel,
dans laquelle le déplacement unidimensionnel est dirigé dans une direction d'arbre, parallèlement à un arbre ( 34 ) rotorique de la turbomachine ( 2 ) fixée.

2. Unité ( 4, 52 ) de socle de turbomachine suivant la revendication 1,
**caractérisée en ce qu'**au moins deux des pieds ( 8 ) sont montés indépendamment l'un de l'autre, mobiles horizontalement par rapport aux moyens ( 60 ) de fixation.

3. Unité ( 4, 52 ) de socle de turbomachine suivant la revendication 1 ou 2,
**caractérisée en ce que** le pied ( 8 ) mobile a un plateau ( 10 ) de pied ayant un évidement ( 58 ), dans lequel passe le moyen ( 60 ) de fixation fixant le pied ( 8 ) au sol ( 6 ), le plateau ( 10 ) du pied étant, lors d'un déplacement horizontal du pied ( 8 ), déplacé par rapport au moyen ( 60 ) de fixation.

4. Unité ( 4, 52 ) de socle de turbomachine suivant la revendication 3,
**caractérisée en ce que** le moyen ( 60 ) de fixation comprend un boulon qui passe dans une douille ( 24 ) ayant un rebord ( 62 ) et qui est boulonné dans le sol ( 6 ) , le rebord ( 62 ) pressant le plateau ( 8 ) de pied sur le sol ( 6 ).

5. Unité ( 4, 52 ) de socle de turbomachine suivant la revendication 4,
**caractérisée en ce que** la douille ( 24 ) applique au sol ( 6 ) une partie de la pression d'application du moyen ( 60 ) de fixation.

6. Unité ( 4, 52 ) de socle de turbomachine suivant la revendication 4 ou 5,
**caractérisée en ce qu'**un moyen ( 72 ) diminuant le frottement est inséré entre le rebord ( 62 ) et le plateau ( 10 ) du pied.

7. Unité ( 4, 52 ) de socle de turbomachine suivant l'une des revendications précédentes,
**caractérisée en ce que** le pied ( 8 ) mobile est monté mobile en s'éloignant du point ( 30 ) d'immobilisation horizontale et en allant vers le point ( 30 ) d'immobilisation horizontale.

8. Unité ( 4, 52 ) de socle de turbomachine suivant l'une des revendications précédentes,
**caractérisée en ce que** le moyen ( 20 ) d'immobilisation autorise un déplacement vertical de la turbomachine ( 2 ).

9. Unité ( 4, 52 ) de socle de turbomachine suivant l'une des revendications précédentes,
**caractérisée en ce que** le moyen ( 20 ) d'immobilisation se trouve dans un plan médian vertical, qui passe par un arbre ( 34 ) rotorique de la turbomachine ( 2 ) fixée.

10. Unité ( 4, 52 ) de socle de turbomachine suivant l'une des revendications précédentes,
**caractérisée en ce que** le moyen ( 20 ) d'immobilisation est disposé d'un côté de la turbomachine ( 2 ), qui est tourné vers un entraînement.

11. Unité ( 4, 52 ) de socle de turbomachine suivant l'une des revendications précédentes,
**caractérisée en ce que** le moyen ( 22 ) de guidage se trouve dans un plan médian vertical, qui passe par un arbre ( 34 ) rotorique de la turbomachine ( 2 ) fixée.

12. Unité ( 4, 52 ) de socle de turbomachine suivant l'une des revendications précédentes,
**caractérisée en ce que** le moyen ( 22 ) de guidage est disposé d'un côté de la turbomachine ( 2 ), qui est éloigné d'un entraînement.
